# EUROPEAN PATENT SPECIFICATION

(11) **EP 0 894 645 B1**
(45) Date of publication and mention of the grant of the patent: **05.06.2002**
(21) Application number: 97830404.6
(22) Date of filing: 31.07.1997
(51) Int. Cl.: B60C 3/02, B60C 15/02, B60C 9/02

(54) **Tyre for vehicles wheels and mounting rim to be used in combination therewith**
Luftreifen für Fahrzeugräder und Felge verwendet in Kombination mit diesem Reifen
Bandage pneumatique pour roues de véhicules et jante destinée à être utilisée en combinaison avec ledit bandage

(43) Date of publication of application: 03.02.1999
(73) Proprietor: PIRELLI PNEUMATICI SOCIETA' PER AZIONI, 20126 Milano (IT)
(72) Inventor: Caretta, Renato, Gallarate (Varese) (IT)
(74) Representative: Righetti, Giuseppe

(56) References cited:
- EP-A- 0 389 307
- DE-A- 2 430 890
- FR-A- 2 348 066
- FR-A- 2 499 911
- GB-A- 1 376 044
- NL-A- 7 016 947
- US-A- 2 915 102
- US-A- 3 245 853
- US-A- 3 318 357
- US-A- 3 606 921
- US-A- 5 115 852

## Description

The present invention relates to a tyre for vehicle wheels, of the type comprising: an air tube or inflatable core of toroidal conformation, having a transverse profile in the form of a closed ring; a carcass structure comprising at least one first carcass ply formed of at least one first thread-like element wound around the transverse profile of the air tube to form first turns disposed consecutively in side by side relationship along the circumferential extension of the air tube; a pair of annular elements for anchoring to a rim, axially spaced apart from each other and extending circumferentially on the air tube surfaces at a radially inner position; a belt structure circumscribing the carcass structure at a radially outer position relative to the rotation axis of the tyre; a tread band disposed circumferentially at a radially outer position relative to the belt structure.

The present invention also relates to a rim to be operatively coupled with said tyre, said rim being of the type comprising a central portion for engagement with a hub of a vehicle wheel, and engagement means for said tyre; the invention further relates to a wheel consisting of said tyre and rim assembly.

Accomplishment of the tyre advantageously takes place according to a method comprising the steps of: forming an air tube or inflatable core of toroidal conformation having a transverse profile in the form of a closed ring; covering the inflatable core with a carcass structure, accomplishment of which involves winding of at least one first thread-like element around the transverse profile of the inflatable core so as to form first turns disposed consecutively in side by side relationship along the circumferential extension of the inflatable core to define a first carcass ply integrally covering the inflatable core; associating a circumferentially inextensible belt structure and a tread band circumferentially external to the belt structure, with the carcass structure at a radially outer position.

It is known that tyres for vehicle wheels currently have a toroidal conformation the profile of which seen in cross-section is open on its circumferential inner side. In more detail, the tyre profile seen in cross-section is delimited between two inner circumferential edges defined by corresponding beads axially spaced apart from each other. An inextensible annular element, usually referred to as bead core, is integrated into each bead and an elastomer filling usually obtained by extrusion is to be circumferentially applied to the outer surface of said bead core.

Turned up around the cross-sectional profile of the bead core are the flaps of one or more carcass plies. Each carcass ply is made up of a plurality of textile cords disposed parallelly in side by side relationship and incorporated in an elastomer layer produced with the aid of appropriate calenders fed from an extrusion die. The rubberized fabric obtained from this step is then transversely cut into pieces of the desired length that are subsequently joined together at the respective side edges, optionally by slight mutual overlapping, in order to make a rubberized ply having transversely-disposed textile cords.

The assembly formed of one or more of said carcass plies and the bead cores with the respective elastomer filling form the so-called carcass structure of a tyre.

Applied to the carcass structure, at a circumferentially outer position, is a circumferentially inextensible belt structure, comprising one or more superposed strips of rubberized fabric formed of textile and/or metallic cords. Circumferentially superposed on the belt structure is a tread band obtained by extrusion, by means of which the tyre gets into contact with the ground.

Beads are such structured and shaped that they interact with respective circumferential portions of a rim with which the tyre is associated, to ensure a steady connection between these two components of a wheel.

In more detail, coupling between the bead and the corresponding circumferential portion of the rim enables the bead to be constantly pushed against an abutment shoulder by effect of the tyre inflation pressure. In tubeless tyres, that is tyres devoid of an air tube, coupling between the bead and the corresponding circumferential rim portion is conceived in such a manner that a hermetic seal of the air contained in the tyre is also ensured.

In any case, both in tubeless tyres and in tyres providing employment of an air tube, the task of counteracting the inner inflating pressure of the tyre relies on the rim.

In addition to the above described tyres having a transverse profile of open section, use of which is almost universally spread for all types of road vehicles, several types of tyre of a transverse sectional profile in the form of a closed ring have been proposed. For example, US Patent 4,232,723 discloses a tyre having an air tube and a carcass structure essentially comprising a ribbon-like ply reinforced with radial threads which extends in the circumferential extension of the tyre and is wound by its end flaps round the air tube so as to cover it over the whole transverse sectional profile thereof. A belt structure is interposed between the carcass ply and the air tube, at a circumferentially outer position relative to the air tube; said belt structure has a substantially flat profile in cross-section and is essentially formed of one or more strips extending circumferentially of the tyre and turned up around two inextensible annular elements located at the region usually referred to as tyre shoulder.

Coupling between the tyre and rim is obtained by a circumferential ridge of one piece construction with the elastomer material forming the tyre sidewalls, and extending at a radially internal and centred position relative to the tyre.

Another type of tyre having a closed cross-sectional profile is disclosed in US Patent 4,283,366, herein reported as an example of the most relevant state of the art in connection with the present invention. It represents the features of the preamble of claim 1.

This tyre comprises an air tube having a substantially oval sectional profile, a pair of bead cores axially spaced apart from each other and located directly in contact with the air tube, on the side thereof turned towards the tyre axis. The assembly formed of the air tube and bead cores is enclosed in a carcass structure essentially formed of a cord spirally-wound about the cross-sectional profile of the air tube. The cord thus wound forms a plurality of turns disposed consecutively in side by side relationship along the circumferential tyre extension, and oriented in respective planes substantially radial to the rotation axis of the tyre itself.

Applied to the air tube at a radially outer position thereof is a belt comprising one or more circumferentially-inextensible belt strips, on which the tread band is superposed.

During the carcass structure formation, as well as during the following steps of the construction process, the air tube in a raw state is maintained to its toroidal conformation by an inner core susceptible of disintegration, said core giving the air tube sufficient consistency so as to enable it to bear any type of handling. This core, essentially consisting of powders aggregated by a binder, is disintegrated after vulcanization of the tyre and the remaining powders are removed from the air tube through one or more tyre inflating valves.

Use of a sufficiently rigid inner core susceptible of disintegration was made necessary in order to enable winding of the carcass cord round the air tube already shaped in an oval form, because the alternative solution of inflating the air tube to give it the necessary consistency during the tyre construction steps inevitably caused the air tube to acquire a right-section circular shape. To the ends of the present invention it is pointed out that "oval" and "elliptic" as herein considered are substantially equivalent terms.

The Applicant has become aware of the fact that laying down of the cord on the air tube having a circular shape in section would involve a variation in the radius of curvature of the cord at the moment of changing the air tube shape from circular to elliptic, as well as a variation in the cord thickness, thereby bringing about an uneven and unbalanced distribution of efforts in the carcass ply.

In accordance with an initial intuition the Applicant has noticed that thickness control and evenness of the turns disposed on the air tube is however less critical for high-performance tyres of lowered section, that is tyres in which the ratio between width and height is lower than or equal to 0.70.

However, based on this intuition which is only valid for particular items, a solution has been studied that could be appropriate for any type of tyre.

In accordance with the present invention it has been found that manufacture of a tyre can be greatly simplified and improved if the air tube or inflatable core on which the carcass structure is formed has one or more portions of differentiated resistance to the inflating pressure. In this manner, the inflatable core takes a sectional profile of the desired conformation when it is inflated to the preestablished pressure before beginning accomplishment of the carcass structure. It has been also found that manufacture of a tyre can be further simplified if the annular anchoring elements forming the tyre beads are disposed externally of the first carcass ply that can be made directly about the air tube, and optionally interposed between the first carcass ply and a holding structure made round said annular anchoring elements. Conveniently, this holding structure may comprise a textile structure that can consist of a second carcass ply wound, at least partly, about the first carcass ply.

It has been also found that, by so doing, it is possible to easily obtain a tyre of a cross-sectional profile in the form of a closed ring, having many advantageous aspects not only relative to the other known tyres of closed cross-sectional profile, but also relative to traditional tyres having an open-line cross-sectional profile.

Still in accordance with the invention, it has been also found that by using shaped annular anchoring elements defining radially inner projections relative to the air tube, a steady anchoring of the tyre can be achieved by means of locating sides facing towards each other and arranged to act and bear on respective abutment surfaces of a rim facing away respectively from an equatorial median plane.

In particular, the invention relates to a tyre for vehicle wheels characterized in that said inflatable core has at least one circumferential portion of differentiated resistance to the inflating pressure.

More particularly, said circumferential portion is preferably arranged at at least one of the intrados and extrados portions of said core.

In a possible preferential solution, said inflatable core comprises at least one air tube with at least one wall of differentiated thickness at said at least one circumferential portion of differentiated resistance.

According to an alternative solution, the inflatable core comprises an air tube provided with at least one portion of material of different modulus at said at least one circumferential portion of differentiated resistance.

According to a further alternative embodiment, said inflatable core comprises an air tube and at least one strip-like element disposed on at least one surface portion of said at least one air tube to form said portion of differentiated resistance.

In accordance with another feature of the invention, each of said annular anchoring elements is disposed externally of the first carcass ply and is preferably, at the opposite side relative to the carcass ply, covered with at least one holding and reinforcing structure which preferably extends beyond the opposite circumferential edges of the anchoring element so as to be superposed on the first carcass ply.

Advantageously, the air tube is made of a material impervious to air, natural or butyl rubber for example, which is particularly appropriate to withstand more than one vulcanization cycle without impairing its mechanical-strength and air-imperviousness features.

This makes it possible to advantageously form the carcass structure on the already vulcanized and partly inflated air tube, so that it can offer some structural consistency.

Preferably, the first thread-like element is a cord of any appropriate textile or metallic, natural or synthetic material, namely a textile cord of sizes included between 0.28 mm and 1.2 mm measured following ASTM-D-1777 standard. Preferably, each of the first turns formed by said thread-like element is oriented at an angle included between 73° and 90° relative to a circumferential extension direction of the tyre.

Alternatively, the first carcass ply can be essentially formed of a ribbon-like band comprised of at least two parallel thread-like elements, said ribbon-like band being wound round the transverse profile of the air tube to form said turns disposed consecutively in side by side relationship along the circumferential extension of the air tube itself.

Preferably, said ribbon-like band comprises two to twenty thread-like elements disposed parallelly to each other.

In a possible embodiment, the holding and reinforcing structure involves a textile structure defined by at least one second carcass ply formed of at least one second thread-like element wound around the first carcass ply and said annular anchoring elements to form second turns disposed consecutively in side by side relationship along the circumferential extension of the latter.

Said second thread-like element may consist for example of a cord of textile or metallic, natural or synthetic material, of sizes included between 0.28 mm and 1.2 mm, measured following ASTM-D-1777 standard, formed of turns each oriented at an angle included between 0° and 17° relative to a radial plane passing through the rotation axis of the tyre and, preferably, in the opposite direction relative to the orientation of the turns forming the first carcass ply.

The second carcass ply too may be comprised of a ribbon-like band formed of at least two parallel thread-like elements, said ribbon-like band being wound about the transverse profile of the air tube to form said turns disposed consecutively side by side.

At least one first layer of elastomer material may be interposed between the first carcass ply and the air tube.

A second layer of elastomer material can be also interposed between the first carcass ply and said at least one textile holding and reinforcing structure.

In accordance with an innovatory feature of the invention that can be also exploited independently of the above features, each of said annular anchoring elements has a main portion of a substantially cusp-shaped profile seen in cross-section so as to define an inner circumferential projection relative to the first carcass ply.

The main portions of the annular anchoring elements have respective locating sides substantially facing towards each other and arranged to act and bear on respective circumferential abutment surfaces offered by a rim to be associated with said tyre and facing respectively away from an equatorial median plane.

Preferably, each anchoring element further has a prolongation portion starting from the main portion and tapering away from the rotation axis of the tyre.

In a possible embodiment of the invention, the annular anchoring elements, preferably made of an elastomer material of a hardness included between 72° and 94° A Shore, are mutually linked by at least one interconnecting portion extending between said main portions.

It may be also advantageously provided that each annular anchoring element should further comprise an annular reinforcing insert at least partly incorporated in the main body.

This annular reinforcing insert can be disposed at a radially inner position relative to said main body and optionally integrally incorporated into the main body.

The main body of the anchoring element may further have at least one circumferential fitting cut extending from the annular reinforcing insert to an outer surface of the main body.

The annular reinforcing insert can be advantageously made of a textile or metallic material, preferably by at least one thread-like element wound up to form a plurality of turns about the rotation axis of the tyre.

In a possible embodiment, the tyre in question further comprises at least one circumferential hump defined at a radially outer position on the carcass structure and engaging in an anchoring seating conforming in shape to said hump and defined in the belt structure for fixing the axial belt positioning relative to the carcass structure.

This circumferential hump is preferably defined by at least one ribbon-like element applied about the carcass structure.

Advantageously, the air tube can have at least one circumferential ribbing extending at a radially inner position, preferably made of self-sealing material.

Still in accordance with the present invention, the tyre in question lends itself to be coupled with a rim characterized in that the side surfaces for tyre retention, usually referred to as rim flanges , are disposed at an axially inner position relative to the tyre beads.

Further features and advantages will be more apparent from the detailed description of some preferred but non-exclusive embodiments of a tyre for vehicles in accordance with the present invention, coupled with a respective rim.

This description will be taken hereinafter with reference to the accompanying drawings, given by way of non-limiting example, in which:
- Fig. 1 is a half-section of a wheel made up of a tyre and a rim made in accordance with the present invention, seen in section along a plane radial to the rotation axis of the tyre;
- Fig. 2 is a half-section similar to Fig. 1, based on a second embodiment of a wheel in accordance with the invention;
- Fig. 3 shows a third embodiment of a wheel also seen in section along a plane radial to the rotation axis of the tyre;
- Fig. 4 diagrammatically shows accomplishment of a winding step of a thread-like element for making a carcass structure about the transverse profile of an air tube;
- Fig. 5 diagrammatically shows the tyre carcass seen in cross-section, introduced into a vulcanization mould, on closing of the mould;
- Fig. 6 is a schematic top view of a plant for making tyre carcasses in accordance with the process in reference;
- Fig. 7 is a schematic view of a plant portion to be used for making belt and tread band structures.

In each of said figures, the different wheel components in accordance with the invention are distinguished by the same reference numerals as used for the corresponding wheel parts in the other figures.

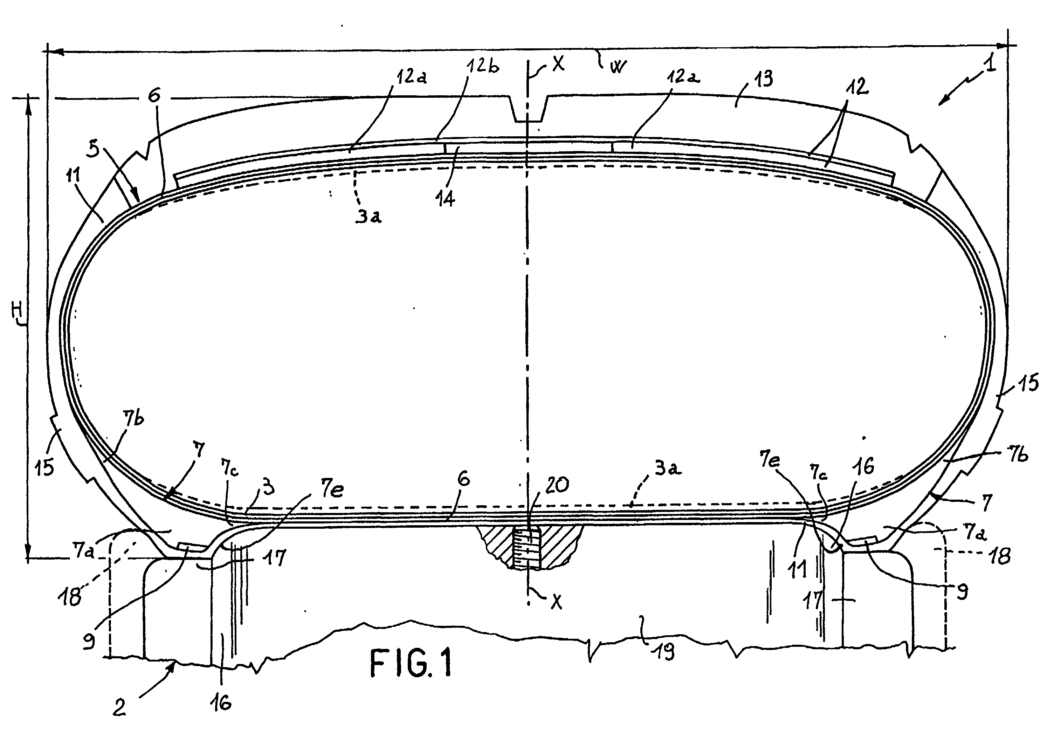

For the sake of clarity in the drawings, section chain lines have been purposely omitted from tyres shown in Figs. 1, 2 and 3.

The foregoing being stated, a tyre for vehicles in accordance with the present invention has been generally identified by reference numeral 1.

Tyre 1 lends itself to be associated with a respective rim 2 so that altogether they define a vehicle wheel.

Tyre 1 comprises an air tube 3 of toroidal conformation, essentially defined by a tubular element extending circumferentially about the geometric axis of the tyre.

To the ends of the present invention, by "inflatable core" it is intended an inflatable toroidal element such as an air tube 3 for example, or a composite element wherein the air tube is only one of the parts forming it. For description purposes, this inflatable core will be in the following also called "air tube", unless said core is a composite element obtained by associating the air tube with an element external thereto.

As shown in the accompanying figures, the air tube 3 has a transverse profile in the form of a closed ring, of an elongated elliptic configuration parallel to the rotation axis of the tyre. By transverse profile it is herein intended the configuration offered by the air tube half-section cut through a plane radial to the rotation axis of tyre 1.

As already seen, maintaining of this elliptic configuration during the tyre manufacturing steps, even on increasing of the inflating pressure, is essential for achieving a high qualitative level in the finished tyre.

The air tube 3 is preferably made of a material impervious to air, natural or butyl rubber for example, preferably butyl rubber, adapted to withstand more than one vulcanization cycles without losing its mechanical and imperviousness features.

In more detail, the air tube 3 can be advantageously obtained by an injection moulding process according to a technique usually known as "moulding of hollow bodies". In accordance with this technique, an elastomer material, preferably butyl rubber, is injected into two opposite cavities defined between two respective mould halves located close to each other and an inner core or former interposed between the mould halves. Said former is of such structure and sizes that it keeps the mould halves slightly separated from each other, so that the end edges of the air tube halves are mutually separated at the end of the injection step. When injection has been completed, the core or former is removed from the mould halves and said mould halves are moved close to each other so that they bring the air tube halves to fit together at the respective opposite end edges. The air tube closed in the mould is vulcanized or pre-vulcanized until a vulcanization degree at least of 50% causing, by effect of molecular cross-linking of the elastomer material, combination of the two parts to form a single piece.

To the ends of the present invention, the above mentioned known moulding art for hollow bodies is preferred in that it enables regions of differentiated resistance to pressure to be formed in the extension of the transverse profile of the air tube. In particular, regions of greater thickness 3a can be obtained at the tyre intrados and/or extrados for example, in order to ensure maintaining of the elliptic conformation by the air tube during the following steps of the manufacturing process.

In addition or in alternative to the above solution, these regions of differentiated resistance 3a may be made of materials of different modulus, preferably greater than that used to make the remaining part of the air tube 3.

Formation of the air tube 3 can be also obtained for example by a moulding process according to which a very fluid elastomer material, rubber latex for example, is introduced into the cavity of a mould which is subsequently set in rotation on a gyroscopic system defined by at least two orthogonal axes. Rotations performed by the mould about either axis of the gyroscopic system are controlled in such a manner that a homogeneous distribution of the elastomer material on the inner walls of the mould cavity is ensured. When distribution is over, the elastomer material is vulcanized or pre-vulcanized following the desired vulcanization degree.

Alternatively, the air tube 3, independently of how obtained, can be employed for one or more steps of the manufacturing process of the raw carcass in a non-vulcanized form.

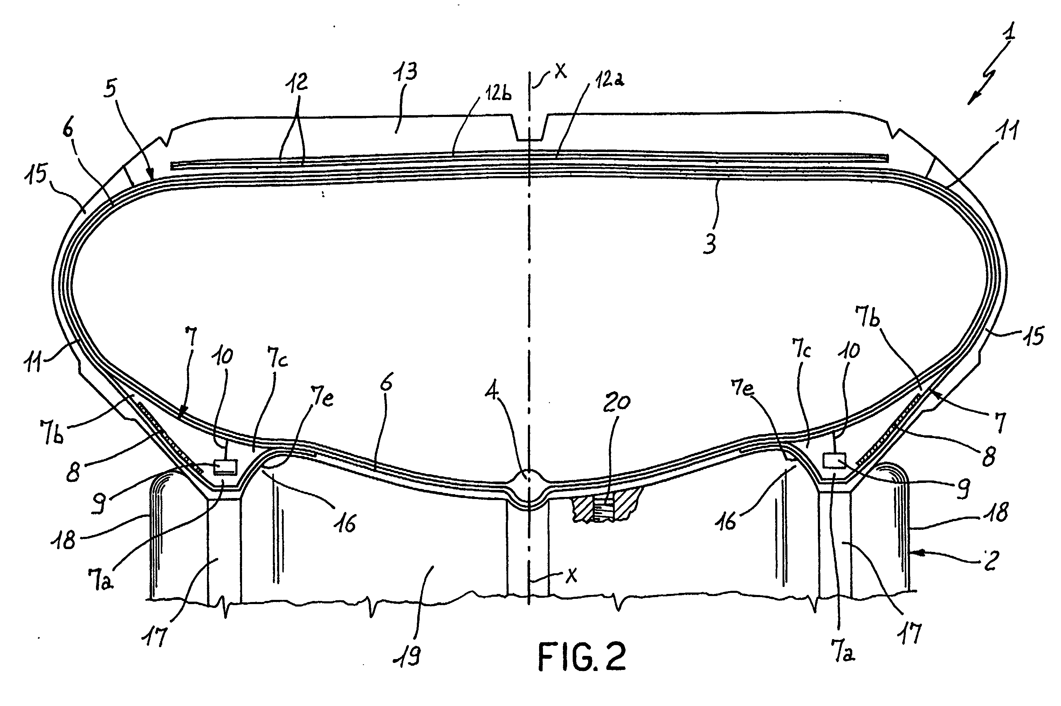

The air tube 3 can be advantageously provided, for said core formation, with at least one raised body that in the embodiment shown in Fig. 2 is defined by a circumferential ribbing 4 located at a radially inner position relative to the air tube itself.

This circumferential ribbing 4 can be advantageously utilized, as will be better understood in the following, as a reference and guide element during the working processes for making tyre 1. The raised body 4 can be advantageously made of a self-sealing material, so as to enable admission of air, for tyre-inflating purposes, by means of a needle or the like introduced into the raised body. In a manner known per se, upon drawing out of the inflating needle, the self-sealing material forming the raised body 4 closes upon itself thereby causing a hermetic seal of the hole produced by the needle.

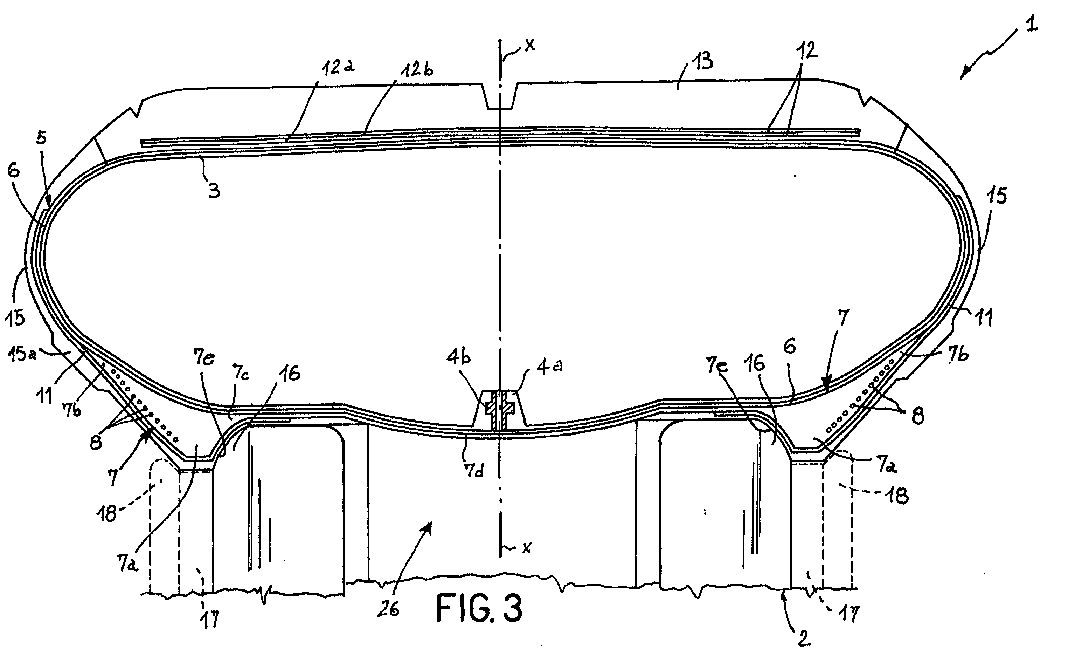

In accordance with a further alternative solution shown in Fig. 3, ribbing 4 is replaced by one or more raised bodies 4a of one piece construction with the air tube 3 and projecting internally thereof. Preferably, four raised bodies 4a are provided and they are disposed circumferentially being spaced apart 90° from each other. Defined in each raised body 4a, directly during the step of forming the air tube 3, is a seating into which an airtight one-way valve 4b is fitted. Valve 4b, known per se and therefore not further described, can advantageously be made of an elastomer material incorporating fillers of magnetic material. This enables the valve to be easily identified with the aid of appropriate sensor means, for the purpose of inflating the tyre, in spite of its being invisible from the outside, in that it is hidden under the carcass structure 5.

For tyre inflation, the raised body 4, 4a can be replaced by a check valve provided with a closure member of known and conventional type.

The air tube 3 is enclosed in a carcass structure 5 comprising at least one first carcass ply 6 directly made about the closed ring-shaped transverse profile of the air tube itself. More particularly, the first carcass ply is advantageously formed of at least one thread-like element, consisting of a monofilament or a bundle of monofilaments for example, or a textile cord of sizes included between 0.28 mm and 1.2 mm measured following ASTM-D-1777 standard, wound about the transverse profile of the air tube so as to form turns disposed consecutively in side by side relationship at least at the radially inner surfaces of the air tube 3, and distributed over the whole circumferential extension of the air tube itself.

The material of said thread-like element can be any known textile or metallic material, adapted for the purpose: preferably used are either natural fibres such as rayon or synthetic fibres such as aramide, nylon, a polyester fibre or polyethylene-naphthalene-2,6-dicarboxylate, best known as PEN.

Each of the turns formed by the thread-like element is preferably disposed in a plane substantially radial to the rotation axis of the tyre. More specifically, each of the turns forming the first carcass ply 6 should preferably be oriented at an angle included between 73° and 90°, 87° for example, relative to the circumferential-extension direction of the tyre.

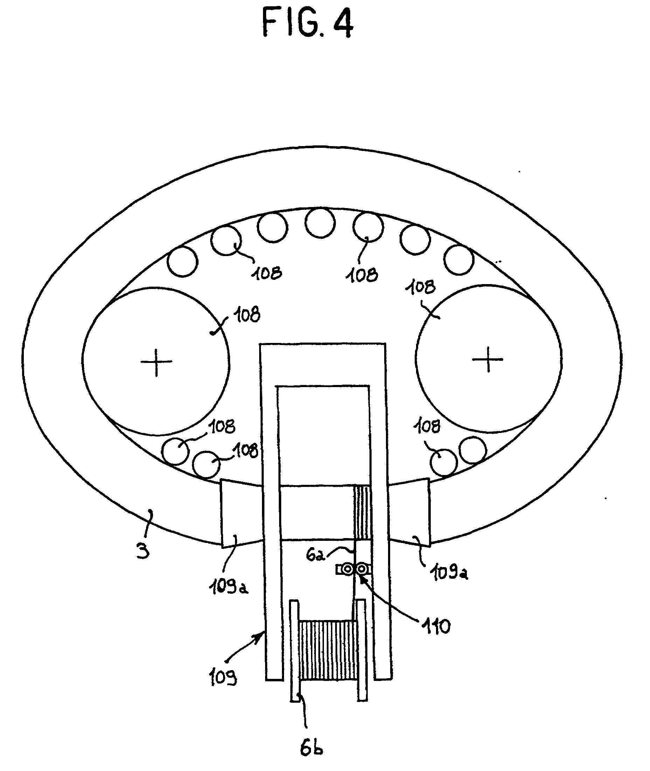

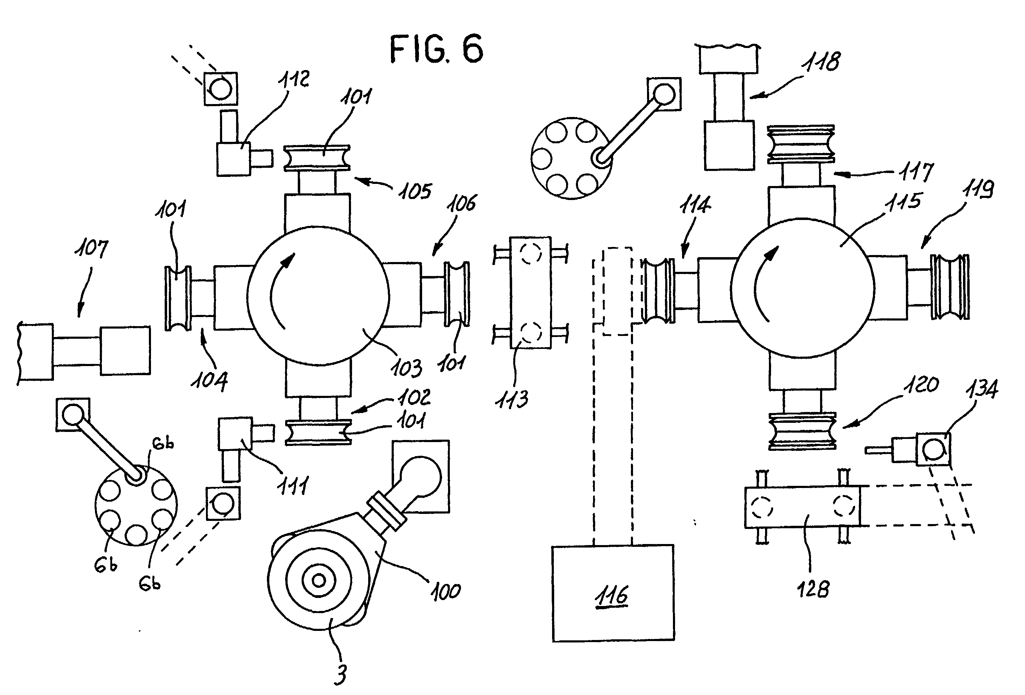

As clearly shown in Figs. 4 and 6, for making the first carcass ply 6 it is advantageously provided for the air tube 3 to be mounted, by a handling device 100, on a support drum 101 located in a first working station 102. The support drum can be mounted on a first revolving turret 102 carrying three other similar support drums 101 for example, that are disposed at a second, third and fourth working stations 104, 105 and 106, respectively.

Through valve 4b, the air tube 3 is inflated to an actual pressure greater than the atmospheric pressure, preferably included between 0.01 and 0.2 bar, and preferably corresponding to 0.075 bar.

By this inflation, the air tube 3 takes a substantially elliptic conformation. To the ends of the present invention, shaping of an element involves a variation in volume of the element itself, usually in terms of volume increase.

Following an angular rotation performed by the first revolving turret 103, the air tube is transferred to a first winding unit 107 located close to the second working station 104, to be fitted - as shown in Fig. 4, on a guide and movement device comprising a set of guide rollers 108.

At least one of the guide rollers 108 can be set in rotation so as to cause the air tube to turn according to the rotation axis of the tyre.

Ribbing 4 can be advantageously utilized for guiding the air tube 3 in its movement according to the rotation axis of the tyre.

The first thread-like element 6a is previously wound on a reel, a spool or other appropriate support element 6b, mounted on a rotating annular distributor 109 that is disposed about the transverse profile of the air tube. The annular distributor 109 can be driven in rotation about its own axis so that the support reel 6b of the thread-like element 6a is caused to turn about the sectional profile of the air tube 3, while the air tube 3 is caused to rotate substantially about its own geometric axis of rotation upon the action of the guide rollers 108.

The rotation speed of the air tube about the rotation axis of the tyre and the revolution speed of the reel or spool 6b carrying the cord 6a round the circumferential direction of the air tube 3, can be easily adjusted with respect to each other, so that turns formed by the cord are laid down at the desired thickness, preferably included between 60 and 120 cords/dm and at the desired angle relative to the circumferential-extension direction of the tyre.

Laying down of turns in planes substantially radial to the tyre axis gives rise to a thinning or decrease in the turn thickness at the radially outermost regions of the air tube, relative to the radially innermost regions. The variation in thickness resulting from this thinning is however within the provided tolerance limits.

Preferably, laying down of the thread-like element 6a on the air tube 3 takes place at a portion of said air tube that is guided between two mutually opposite guide collars 109a, axially passed through by the air tube 3 so as to cause centring of the latter relative to the rotation axis of the annular distributor 108 and shaping in conformity with the desired transverse profile.

The desired shaping of the air tube 3 in an elliptic conformation can be also achieved or facilitated by creating regions of differentiated resistance through application of one or more circumferential strip-like elements intended to form said core in association with said air tube 3, at a radially outer and/or inner position relative to the air tube itself, in addition to or in place of arranging regions having a greater thickness and/or a different modulus 3a and guide collars 109a.
Advantageously, during the above described winding step, the thread-like element 6a is engaged by a driving unit 110 mounted on the annular distributor 108 and engaging the thread itself at a portion included between the support reel 6b and the air tube 3. The driving unit 110, not described in detail as it can be made in a manner known per se and in any case not of importance to the ends of the invention, is essentially comprised of a capstan driven in rotation in synchronism with the rotation of the annular distributor 108, so as to constantly control delivery of the thread-like element 6a from the support reel 6b. In more detail, delivery of the thread-like element 6a is provided to take place, for each turn carried out by reel 6b round the transverse profile of the air tube 3, to an extent slightly lower than the outer perimetric extension of said transverse profile. Thus one can be sure that the thread-like element 6a is laid down delicately on the air tube 3, preferably with a tension not exceeding an elongation of 2%, so that too important deformations of the air tube are not involved.

Still in accordance with the present invention, formation of the first carcass ply 6 can take place by simultaneous winding of two or more cords or thread-like elements disposed parallelly so that ultimately they form a first ribbon-like band that will be wound following the same modalities as previously described with reference to winding of a single cord. Preferably, said ribbon-like band comprises two to twenty thread-like elements parallel to each other.

Advantageously, at least one first layer of elastomer material (not shown in the accompanying figures) may be interposed between the first carcass ply 6 and the air tube 3. This first layer is created for example by applying a sheet of elastomer material in a raw state to the air tube before formation of the carcass ply 6, by means of a first extrusion die 111 for example, operating in the first working station 102.

In a preferential solution the first layer of elastomer material is preferably formed by winding a ribbon-like element of elastomer material on the circumferential extension of the air tube 3 so as to form turns disposed consecutively in side by side relationship, in the same manner as previously described with reference to the cord forming the first carcass ply 6.

The elastomer material applied in a raw state ensures the optimal adhesion of the cord or cords laid down to form the first carcass ply 6 and in addition prevents the material forming the air tube 3 from being possibly damaged as a result of shearing stresses transmitted from the inextensible cord forming the carcass ply.

Advantageously, the first thread-like element or the thread-like elements forming the first ribbon-like band employed in making the first carcass structure 5 are provided to be directly incorporated, by an extrusion operation, into a layer of raw elastomer material joining them together before their being applied to the air tube 3. In this way application of the first layer of raw elastomer material in the first working station 102 can be avoided.

In a third working station 105 a second layer of raw elastomer material can be applied to the first carcass ply 6 formed in the second working station. The second elastomer layer may directly come from a second extrusion die 112, or it may consist of a second ribbon-like element of raw elastomer material that is wound round the transverse profile of the air tube 3 in turns disposed successively side by side, to cover the first carcass ply 6 in a substantially integral manner, by an apparatus similar to the one employed in forming said carcass ply.

Application of this second elastomer layer can be avoided as well, if in making the first carcass ply 6 a thread or a band of threads incorporated in a layer of elastomer material is utilized.

The carcass structure 5 further comprises a pair of anchoring elements 7, axially spaced apart from each other and extending circumferentially in a radially inner position on the surface of said air tube 3. By means of these annular anchoring elements 7 preferably made of an elastomer material optionally reinforced with aramidic fibres and having a hardness included between 72° and 94° A Shore, a steady engagement between the tyre 1 and rim 2 is achieved, as better illustrated in the following.

For the above purpose, each annular anchoring element 7 preferably has a main portion 7a the cross-sectional profile of which is substantially cusp-shaped, so as to define an inner circumferential projection relative to the air tube 3 and the first carcass ply 6 formed thereon. Each anchoring element 7 in addition has at least one prolongation portion 7b extending from the main portion 7a and tapering away from the rotation axis of the tyre. On the opposite side from the prolongation portion 7b, each anchoring element 7 has a radially and axially internal end portion 7c tapering in the direction of the equatorial median plane of the tyre, denoted by line X-X.

As shown in Fig. 3, the radially and axially internal end portions 7c of the annular anchoring elements 7 can be prolonged until they meet so as to form an interconnecting portion 7d between the anchoring elements, thereby stabilizing the mutual axial positioning of same. This solution may appear to be particularly advantageous during the tyre manufacturing step in order to easily establish the exact positioning of the anchoring elements relative to the air tube 3 and the first carcass ply 6 formed thereon.

Each annular anchoring element 7 can be also provided, preferably at the prolongation portion 7b thereof, with at least one textile reinforcing band 8 that can be surface-applied as shown in Fig. 2 or incorporated into the anchoring element, as shown in Fig. 3.

The anchoring elements 7 can be made by injection moulding or by extrusion. In the example in Fig. 6, for application of said anchoring elements to the first carcass ply 6, the carcass structure 5 during its manufacturing step is picked up from the fourth working station 106 by a first transfer ring 113, to be mounted on a fifth working station 114 interlocked to a second revolving turret 115.

The annular anchoring elements 7 formed in a moulding station 116 for example, reach the fifth working station where they are applied to the first carcass ply 6, being preferably axially moved close to the air tube 3. This axial approaching step can be carried out by a step involving rolling of the annular anchoring elements 7 carried out in a manner known per se, in order to ensure an intimate adhesion of said annular elements to the carcass ply 6 or the second layer of elastomer material covering said carcass ply.

As shown in the embodiments in Figs. 1 and 2, each annular anchoring element 7 in addition may comprise at least one annular reinforcing insert 9 which is at least partly incorporated in the main portion 7a. In more detail, the annular reinforcing insert 9 can appear on the surface of the main body 7a, at a radially inner position, as can be seen in the embodiment in Fig. 1.

In this case, the annular reinforcing insert 9 can be partly incorporated in the respective annular anchoring element 7 during the injection moulding step carried out for making said anchoring element. Alternatively, the annular reinforcing insert 9 can be integrally incorporated in the main portion 7a, as shown in Fig. 2. In the last-mentioned case, the annular anchoring element 7 is preferably provided with at least one circumferential fitting cut 10 extending from the annular reinforcing insert to an outer surface of the main body, preferably at a radially outer position relative to said body. Through this circumferential cut 10, fitting of the annular reinforcing insert 9 into the annular anchoring element 7 7 is carried out. Said anchoring element can be pre-vulcanized before its use in making tyre 1.

Advantageously, the annular reinforcing insert 9 can be made either of a metallic material or of a textile material such as an aramidic fibre, preferably by one or more thread-like elements wound round the rotation axis of tyre 1 so as to form turns thereon, substantially in the same manner as usual reinforcing bead cores in known tyres having an open toroidal profile.

Advantageously, each annular anchoring element 7 is externally applied to the first carcass ply 6. In an alternative embodiment of the present invention viewed in Figs. 2 and 3, each annular anchoring element 7 is further covered, on the opposite side relative to the carcass ply, with at least one textile holding and reinforcing structure 11. Preferably this textile holding and reinforcing structure 11 goes beyond the opposite circumferential edges of the anchoring element, extending over the first carcass ply 6.

In the embodiment shown in fig. 3, the textile holding and reinforcing structure, for each anchoring element 7 comprises at least one ribbon-like band 11 extending along the whole circumferential extension of the anchoring element.

This ribbon-like band 11, for instance, can be comprised of cords of natural or synthetic textile fibre, aramide fibre for example, disposed parallel to each other, oriented at an angle included between 17° and 0° relative to the extension direction of the cords belonging to the first carcass ply 6, preferably in a symmetric manner relative to a meridian plane of the tyre.

The ribbon-like band 11 can be advantageously applied to the respective annular anchoring element 7 before or after application of the anchoring elements to the first carcass ply 6.

Alternatively, as shown in the embodiment in Fig. 2, the textile holding and reinforcing structure can be made of at least one second carcass ply 11 extending round the first carcass ply 6 and the annular anchoring elements 7.

The second carcass ply 11 can be advantageously made at a sixth working station 117 provided with a second winding unit 118 similar to the first winding unit 107. In this case the second carcass ply 11 is made by winding at least one second thread-like element round the first carcass ply and the annular anchoring elements 7, in the same manner as explained with reference to the first ply 6, thereby obtaining turns disposed consecutively in side by side relationship along the circumferential extension of the anchoring elements. In this case too the thread-like element utilized in making the second carcass ply 11 can be incorporated in a layer of elastomer material. The second carcass ply 11 may be also made by simultaneously winding two or more second thread-like elements disposed parallelly side by side to form a second ribbon-like band comprising two to twenty second thread-like elements for example, optionally incorporated in said layer of elastomer material.

The material of said thread-like elements can be any convenient known textile or metallic, natural or synthetic material and it can even be the same material as the one utilized for making the first carcass ply 6. Preferably, turns forming the second carcass ply 11 are oriented at an angle included between 73° and 90° relative to the circumferential-extension direction of the tyre, oppositely to the orientation of the turns belonging to the first ply 6. Preferably the cord or cords employed in making the second carcass ply 11 have a size included between 0.28 mm and 1.2 mm, measured following ASTM-D-1777 standard, and the turns they form are distributed with a thickness included between 60 and 120 cords/dm, measured at a circumferential position external to the air tube 3.

If the thread-like elements employed in making the second carcass ply 11 are not previously covered with elastomer material, application of a third layer of elastomer material round the second ply may be provided. This application can be carried out in a seventh working station 119, in the same manner as previously described with reference to application of the first and second elastomer layer, if any.

As shown in Fig. 2, the circumferential extension of the second carcass ply can be stopped at the radially inner region of the tyre included between the annular anchoring elements 7.

Interruption of the circumferential extension of the second carcass ply 11 can be advantageously carried out by circumferentially cutting the carcass ply itself once the helical winding of the cord or cords to form said carcass ply has been accomplished. This cutting operation is made easier by the fact that at the region included between the annular anchoring elements 7 the second carcass ply 11 is located spaced apart from the first carcass ply 6, because the cusp-shaped main portion 7a of each annular anchoring element 7 projects at a radially inner position from the first carcass ply.

Once the circumferential cutting operation has been completed, the flaps of the second carcass ply 11 can be applied to the inner end portions 7a of the reinforcing elements 7 and the radially inner portion of the first carcass ply 6, so that they conform in shape to the transverse sectional profile of said elements, by means of a rolling operation, for example.

The above mentioned cutting and rolling steps can be carried out at an eighth working station 120.

Preferably, as previously described and illustrated in the accompanying figures, the cross-sectional profile of the air tube 3 and the carcass structure 5 has an axially-elongated elliptic configuration relative to the tyre. Preferably the ratio between the maximum radial size H and maximum axial size W of the tyre taken as a whole is lower than or equal to 0.65.

Tyre 1 further comprises a belt structure 12 circumscribing the carcass structure 5 at a radially outer position with reference to the rotation axis of the tyre. Circumferentially applied to the belt structure 12 is a tread band denoted by 13.

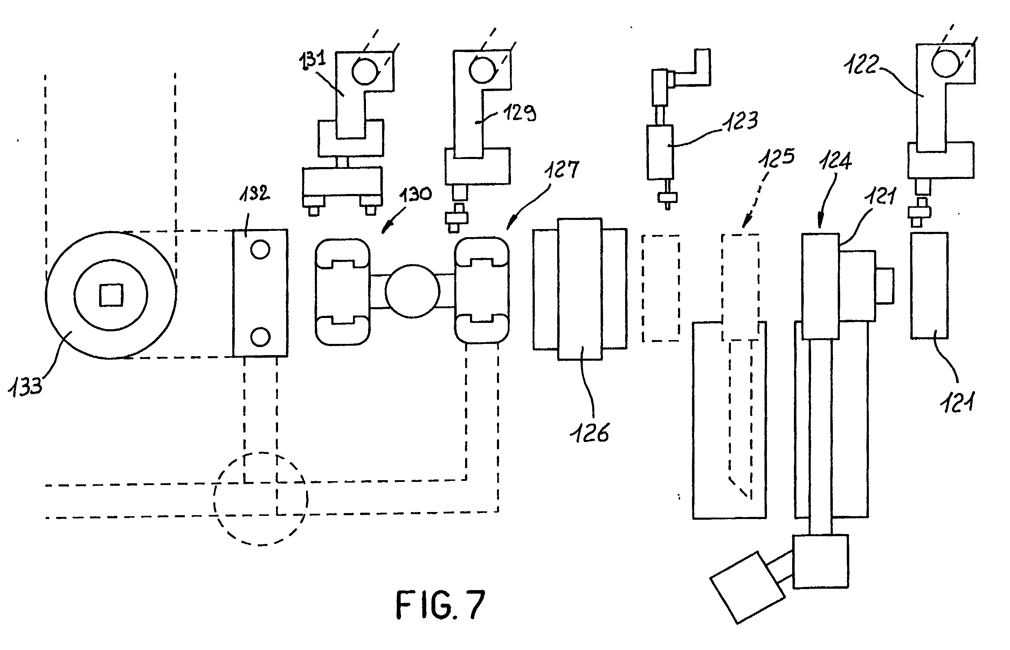

Belt structure 12 can be made by winding of at least one belt strip directly round the carcass structure 5. Alternatively, as shown by way of example in the schematic view in Fig. 7, for accomplishment of belt structure 12 first formation of a sleeve of elastomer material 12a (Figs. 1-3) is provided, by winding up a ribbon-like strap directly fed from a third extrusion die 122 on a cylindrical drum denoted by 121 in Fig. 7 for example, so as to form turns disposed axially in side by side relationship.

Alternatively, sleeve 12a can be formed directly by extrusion of a tubular workpiece, which is then fitted on the cylindrical drum 121. Then an inextensible belt strip is applied to sleeve 12a, which belt strip is obtained from a spiralling unit 123 for example, that carries out winding of one or more cords to form a plurality of circumferential turns disposed consecutively side by side.

As shown in Fig. 7, application of the inextensible belt strip 12b can be preceded by application of one or more mutually-crossed cord-made strips, these applications being carried out in a first and a second application stations 124, 125, respectively.

Through a second transfer ring 126, the belt structure 12 is then picked up from the operating site interlocked to the spiralling unit 123, to be fitted on the previously produced carcass structure 5 and transferred from the eighth working station 120 to a ninth working station 127, by means of a third transfer ring 128, for example.

In this ninth station, application of the tread band 13 to the belt structure 12 can be carried out. The tread band 13 can be advantageously made by winding of at least one continuous elongated element of raw elastomer material round the belt structure. This continuous elongated element can be advantageously produced by a fourth extrusion die 129 directly operating on the ninth working station 127.

Application of further tyre components can be carried out for example in a tenth working station 130; such components may be for instance the tyre sidewalls 15 that can be also produced by circumferentially applying a continuous strip-like element of raw elastomer material to the carcass structure 5. This continuous strip-like element too can be produced by a respective fifth extrusion die 131 operating in the tenth working station.

By a fourth transfer ring 132 or equivalent means the thus manufactured tyre can be then introduced into an appropriate mould 133 and submitted to a vulcanization step.

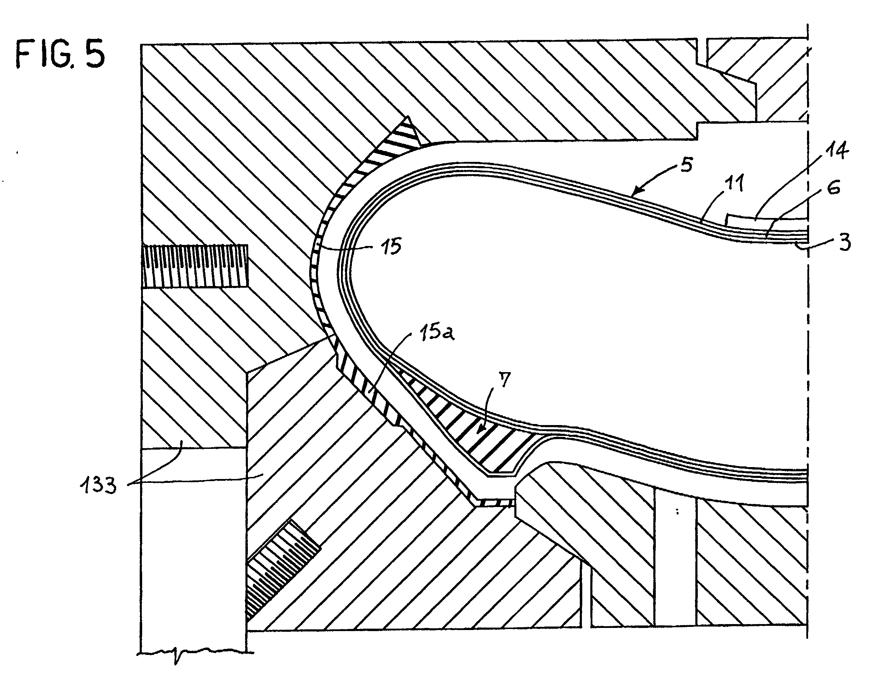

Advantageously, the carcass structure 5 can be introduced into mould 133 while keeping the same pressure as created during the conformation step, or under deflated conditions, as in Fig. 5, and be subsequently inflated by admission of air or other fluid under pressure to the air tube 3 in order to ensure adhesion thereof to the inner mould walls during the vulcanization step. Carcass 5 can be advantageously maintained under inflated conditions even during the cooling step following vulcanization. This aspect is particularly advantageous in that it has been found that tyre cooling under inflated conditions gives the tyre better qualitative features.

The above described steps in connection with the belt structure 12 and tread band 13 manufacture give rise to a monolithic tyre in which the carcass structure 5 is vulcanized simultaneously with the annular element comprised of said belt and tread band structures.

However, in accordance with the present invention, the belt structure 12 and tread band 13 may be provided to be mutually assembled separately from the carcass structure 5, to be applied to the latter before the tyre vulcanization step. In accordance with a further alternative solution, the annular element formed of the belt structure 12 and the tread band 13 may be vulcanized separately from the carcass structure 5, to be associated with the latter subsequently to the carcass vulcanization.

In this case, the assembly formed of the belt structure 12 and tread band 13 can be easily replaced in case of damages to the tread band or wear thereof or when the tread band is to be replaced due to different operating requirements, if it is necessary to pass from a winter tread band to a summer thread band, for example.

In accordance with a further feature of the present invention, at least one circumferential hump 14 can be defined on the carcass structure 5, at a radially outer position, said hump 14 engaging in an anchoring seating conforming in shape to it and defined in the belt structure 12. This solution is particularly useful for fixing the axial positioning of the belt structure 12 and consequently the tread band 13 relative to the carcass structure 5, above all in the case in which the belt structure-tread band assembly is made as a replaceable element vulcanized separately from the carcass structure 5. In this case it is advantageously possible to carry out a quick replacement of the tread band 13, together with the belt structure 12, in case of wear for example or when mounting of a tread band and belt having different operating features is required.

Said circumferential hump 14 can be obtained, for instance, by circumferential winding of at least one ribbon-like element, made of aramide pulp or other appropriate material, applied to the carcass structure 5.

Application of the circumferential hump can be carried out by a further extrusion die 134 for example, operating at the eighth working station shown in Fig. 6.

Further protection elements forming the tyre, such as the sidewalls 15 and bead-protecting elements 15a for example, can be associated with the carcass structure directly during the vulcanization step thereof. In this case, the sidewalls 15 and/or bead-protecting elements 15a and/or other protection elements can be obtained by injection of elastomer material into respective cavities defined within the vulcanization mould 133 when the latter is closed around the carcass structure 5. Once the inner core has been removed, the protection elements 15, 15a keep an adhering position relative to the inner mould walls, as shown in Fig. 5, to be then applied to the outer surfaces of the carcass structure 5 following closure and subsequent inflating of said carcass structure within the vulcanization mould.

It is important to note that, in accordance with the present invention, the air tube 3 is preferably shaped by inflation to a first pressure, adapted to give said air tube an elliptic conformation and said shape is preferably maintained substantially unchanged over the whole manufacturing steps of the raw carcass.

During the vulcanization step, carcass 5, once it has been closed in mould 133, is inflated to a second pressure, higher than said first pressure, to bring it to adhere to the inner mould walls so as to obtain moulding of the tread pattern impression and the sidewall pattern. Preferably, said second pressure is maintained during the following tyre cooling step.

Still in accordance with the present invention, tyre 1 lends itself to be utilized in combination with a rim 2 usually comprising a central portion (not shown) for connection to a hub of a vehicle wheel.

Rigidly linked to said central portion is coupling means for connection with tyre 1 that, in accordance with the present invention, comprises a pair of circumferential abutment surfaces 16 located at axially opposite positions relative to an equatorial median plane of the rim, coincident with the equatorial plane X-X of tyre 1, and facing away from the equatorial plane itself.

Each of these circumferential abutment surfaces 16 conforms in shape to, and interacts with the main surface 7a of the corresponding annular anchoring element 7 that, within the tyre structure, is located in the region usually identified as the bead. In more detail, as clearly shown in Figs. 1 to 3, the main portions 7a of the annular anchoring elements 7 have respective locating sides 7e substantially facing each other and arranged to act and bear on the respective circumferential abutment surfaces 16. Thus a stable axial positioning of the annular anchoring elements or beads 7 is achieved. Each of them, in fact, cannot move towards the equatorial plane X-X of tyre 1 in that it is retained by the corresponding circumferential abutment surface 16 of rim 2, and also cannot move away from said equatorial plane X-X in that it is connected to the other annular anchoring element 7 through the carcass ply or plies 6, 11. Preferably, a cylindrical centring surface 17 coaxial with the wheel rotation axis follows each of the circumferential abutment surfaces 16, away from the equatorial plane X-X, on which cylindrical surface 17 the inner circumferential edge of the cusp-shaped main portion 7a of the respective annular anchoring element 7 acts and bears.

In addition, an auxiliary circumferential locating portion 18 (denoted in chain line in Figs. 1 and 3) may be arranged in the extension of each cylindrical centring surface 17, at an opposite position relative to the circumferential abutment surface 16, to give further assurance as regards the steady anchoring of the tyre bead 7. In this case, preferably, the annular element comprising said auxiliary circumferential locating portion 18 is fastened in a removable manner to rim 2 in order to facilitate tyre fitting thereon.

As shown in Fig. 1, the circumferential abutment surfaces can be mutually interconnected by a cylindrical connecting portion 19, on which the inner circumferential region of the carcass structure 6 acts and bears.

Alternatively, the connecting portion 19 of rim 2, can be shaped in such a manner as to offer a curved cross-sectional profile the concavity of which is turned externally of the rim itself, as provided in the embodiment shown in Fig. 2. This embodiment gives better assurance for a steady coupling between the tyre beads 7 and the circumferential abutment surfaces 16. Actually, by effect of the pressure created within tyre 1 following inflation thereof, the carcass ply or plies 6, 11 match the concave profile of the connecting portion 19, causing tensioning of said carcass plies and, as a result, an axial-thrust action of the annular anchoring elements 7 against the abutment surfaces 16 of rim 2. Preferably, the difference between the linear extension of the cross-sectional profile of the connecting portion 19 and the axial distance between the opposite circumferential edges of this portion corresponds to the elastic elongation undergone by the carcass structure 5 at the region included between the annular anchoring elements 7, when the tyre is submitted to an inner inflating pressure.

At least one pressure transducer 20 of known and conventional type may be also operatively engaged through the interconnecting portion of rim 2, said transducer being adapted to detect the inner pressure of tyre 1 through the thrust exerted by the ply or plies 6, 11 of the carcass structure 5.

Advantageously, the presence of transducer 20 does not involve any problem and does not require any particular expedient as regards airtightness in tyre 1. In fact, since tyre 1 is of tubular structure, it is perfectly capable of retaining the air contained therein without requiring any cooperation by rim 2 for this purpose. Transducer 20, engaged through rim 2, is in conclusion located externally of tyre 1 and therefore it is unimportant as regards air tightness.

Alternatively, for the purpose of facilitating operations for assembling and disassembling the tyre to and from the corresponding rim 2, this rim can be made in a dismountable manner, that is made of two or more separate parts removably linked to each other to form a complete rim. These separate parts may comprise at least one disc for connection with the vehicle hub, to which a ring is fastened, which ring at a radially outer position has the same profile as defined by the circumferential abutment surfaces 16 and the connecting portion 19.

In accordance with a further possible embodiment shown in Fig. 3, rim 2 can be devoid of any interconnecting portion between the circumferential abutment surfaces 16. In this case, the carcass structure 5 will be free to take a convex configuration as a result of inflation, within a space 26 defined between the circumferential abutment surfaces 16 that will be mechanically interconnected by means of said central portion or in another similar manner.

The invention achieves important advantages over the known art.

The tyre in reference is in fact obtained by forming the carcass structure directly round a pre-vulcanized air tube utilized as a support for making said carcass structure as well as for applying the other different tyre components.

Thus it is possible to eliminate many intermediate working steps that, in tyres made in accordance with the known art, were executed for obtaining the carcass plies and other different workpieces to be assembled in the subsequent tyre-manufacturing steps.

In conclusion, the tyre structure in accordance with the invention enables the intermediate manufacturing processes to be drastically simplified, so that the whole tyre-manufacturing process can be, for instance, carried out on a single apparatus comprising different carrousel-disposed working stations, as shown in Fig. 6.

It is also to note that in the tyre in question beads are less stressed than in known tyres, also because no function concerning air-tightness relies on them. As a result, reinforcing elements of metal material can be eliminated, at least when the tyre is not of the heavy-duty type, which will be advantageous for recycling of the materials at the end of the useful tyre life.

Under this point of view it is to note that coexistence of metal elements incorporated in the elastomer material has always been a serious problem.

In addition, due to the absence of metal elements, heat supply for the vulcanization step can take place by means of microwaves instead of using steam as in known processes.

This aspect too represents an important advantage for the purpose of simplifying the production plants and in terms of production speed.

However, in the presence of reinforcing elements of metal material, vulcanization can in any case be advantageously carried out in induction furnaces, in which heat transmission takes place by electromagnetic induction through the mould walls.

The construction conception of the tyre in reference and the modalities according to which it is engaged with the respective rim causes the tyre to be in any case efficiently anchored to the rim also in the absence of any outer shoulder, even if the tyre, due to a puncture for example, is obliged to run in the absence of pressure inside it, that is in the condition known by technicians as "flat running".

As above described, in fact, beads are fixedly retained between the abutment surfaces 16 of the rim, without any possibility of axial displacements either in the direction of the equatorial median plane, or away therefrom.

Tyre-rim coupling is therefore adapted to enable running in a sufficiently safe manner even when the tyre is completely deflated.

Another advantage achieved by the invention consists in ensuring an excellent structural homogeneity of the tyre carcass, that cannot be found in traditional tyres having an open sectional profile.

In particular, carcass plies do not have any irregularity resulting from partial overlapping of the ply portions that, in accordance with known processes, are consecutively coupled so as to form a carcass ply of the desired circumferential extension. In addition, formation of carcass plies by direct winding of continuous cords round the air tube of toroidal conformation ensures an excellent structural uniformity of the carcass plies themselves.

Another advantage achieved by the present invention is to enable an important reduction-in-weight of the rim, since the presence of outer shoulders is no longer necessary and, above all, also the connecting portion between the opposite side portions of the rim is not required any more, which portion in the known art necessarily needed an uninterrupted extension for achieving airtightness.

It is also to note that coupling between the tyre and rim in accordance with the present invention is capable of greatly facilitating operations for assembling and disassembling the tyre to and from the rim. This is in particular due to the fact that it is not necessary to arrange on the rims, shoulders of important radial extension acting on the tyre beads from the outside. Even in the presence of inner shoulders, the latter can advantageously have very reduced radial sizes as compared with those required when known open-profile tyres are employed. The outer shoulders can be also mounted in a removable manner, by screws or equivalent connecting means.

Another advantage for improvement of a modular production system resides in the possibility of making the belt structure with the tread band as a pre-vulcanized element to be associated with the carcass structure. In addition, the tread band together with the belt can be easily replaced once it is worn out, so that usual operations for tyre recapping are eliminated.

## Claims

1. A tyre for vehicle wheels, comprising:
- an inflatable core (3) of toroidal conformation, having a transverse profile in the form of a closed ring;
- a carcass structure (5) comprising at least one first carcass ply (6) formed of at least one first thread-like element (6a) wound around the transverse profile of the inflatable core (3) to form first turns disposed consecutively in side by side relationship along the circumferential extension of the inflatable core;
- a pair of annular elements (7) for anchoring to a rim (2), axially spaced apart from each other and extending circumferentially on the inflatable core at a radially inner position;
- a belt structure (12) circumscribing the carcass structure (5) at a radially outer position relative to the rotation axis of the tyre;
- a tread band (13) disposed circumferentially at a radially outer position relative to the belt structure (12),
**characterized in that** said inflatable core (3) has circumferential portions (3a) of differentiated resistance to the inflating pressure.

2. A tyre as claimed in claim 1, wherein at least one first portion (3a) of said circumferential portions of increased resistance to the inflating pressure is disposed at at least one of the intrados and extrados portions of said core (3).

3. A tyre as claimed in claim 2, wherein said inflatable core comprises at least one air tube (3) having at least one wall of increased thickness at said at least one first portion (3a).

4. A tyre as claimed in claim 2, wherein the inflatable core comprises an air tube (3) provided with at least one portion of material having an increased modulus at said at least one first portion (3a).

5. A tyre as claimed in claim 2, wherein said inflatable core comprises an air tube (3) and at least one strip-like element disposed on at least one surface portion of said at least one air tube to form said first portion (3a).

6. A tyre as claimed in claim 1, wherein each of said annular anchoring elements (7) is disposed externally of the first carcass ply (6).

7. A tyre as claimed in claim 6, wherein each of said annular anchoring elements (7) is covered, on the opposite side relative to the carcass ply, with at least one textile holding and reinforcing structure (11).

8. A tyre as claimed in claim 7, wherein said holding and reinforcing structure (11) extends beyond the opposite circumferential edges of the anchoring element (7) so as to be superposed on the first carcass ply (6).

9. A tyre as claimed in claim 1, wherein said inflatable core (3) is made of a rubber selected from natural rubber and butyl rubber.

10. A tyre as claimed in claim 1, wherein said first thread-like element is a cord of textile material having sizes included between 0.28 and 1.2 mm.

11. A tyre as claimed in claim 1, wherein each of said first turns is oriented at an angle included between 73° and 90° relative to a circumferential-extension direction of the tyre (1).

12. A tyre as claimed in claim 1, wherein said first carcass ply (6) comprises a ribbon-like band formed of at least two parallel thread-like elements, said ribbon-like band being wound around the transverse profile of the inflatable core (3) to form said turns disposed consecutively in side by side relationship along the circumferential extension of the inflatable core.

13. A tyre as claimed in claim 7, wherein said textile holding and reinforcing structure is defined by at least one second carcass ply (11) formed of at least one second thread-like element wound round the first carcass ply (6) and said annular anchoring elements (7) to form second turns disposed consecutively in side by side relationship along the circumferential extension of said annular elements.

14. A tyre as claimed in claim 13, wherein said second thread-like element is a cord of textile material having sizes included between 0.28 and 1.2 mm.

15. A tyre as claimed in claim 13, wherein each of the turns forming the second carcass ply (11) is oriented at an angle included between 0° and 17° relative to a radial plane passing through the rotation axis of the tyre (1).

16. A tyre as claimed in claim 13, wherein each of the turns forming the second carcass ply (11) is oriented in the opposite direction relative to the orientation of the turns forming the first carcass ply (6).

17. A tyre as claimed in claim 13, wherein said second carcass ply (11) comprises a ribbon-like band formed of at least two parallel thread-like elements, said ribbon-like band being wound around the transverse profile of the inflatable core (3) to form said turns disposed consecutively in side by side relationship along the circumferential extension of the inflatable core.

18. A tyre as claimed in claim 1, further comprising at least one first elastomer layer interposed between the first carcass ply (6) and the inflatable core (3).

19. A tyre as claimed in claim 8, further comprising at least one second layer of elastomer material interposed between the first carcass ply (6) and said at least one textile holding and reinforcing structure (11).

20. A tyre as claimed in one or more of the preceding claims,
**characterized in that**
each of said annular anchoring elements (7) has a main portion (7a) having a substantially cusp-shaped cross-sectional profile so as to define a circumferential projection internal to the inflatable core (3).

21. A tyre as claimed in claim 20, wherein each anchoring element (7) further has an axially external prolongation portion (7b) extending from the main portion (7a) and tapering away from the rotation axis of the tyre (1).

22. A tyre as claimed in claim 1 or 20, wherein said annular anchoring elements (7) are mutually linked by at least one interconnecting portion (7d) extending between said main portions (7a).

23. A tyre as claimed in claim 1 or 20, wherein each anchoring element (7) is made of an elastomer material.

24. A tyre as claimed in claim 23, wherein each anchoring element (7) has a hardness included between 72° and 94° A Shore.

25. A tyre as claimed in claim 20, wherein each annular anchoring element (7) further comprises an annular reinforcing insert (9) at least partly incorporated in the main portion (7a).

26. A tyre as claimed in claim 25, wherein the annular reinforcing insert (9) is disposed at a radially inner position relative to said main portion (7a).

27. A tyre as claimed in claim 25, wherein the annular reinforcing insert (9) is integrally incorporated in the main portion (7a).

28. A tyre as claimed in claim 27, wherein said main portion (7a) has at least one circumferential fitting cut (10) extending from the annular reinforcing insert (9) to an outer surface of the main portion.

29. A tyre as claimed in claim 25, wherein the annular reinforcing insert (9) is made of a textile material.

30. A tyre as claimed in claim 25, wherein the annular reinforcing insert (9) is made of a metallic material.

31. A tyre as claimed in claim 25, wherein the annular reinforcing insert (9) is made of at least one thread-like element such wound up as to form a plurality of turns round the rotation axis of the tyre (1).

32. A tyre as claimed in claim 1 or 20, wherein the tread band (13) and belt structure (12) define an interchangeable annular element associated in a removable manner with said carcass structure (5).

33. A tyre as claimed in claim 1 or 20, further comprising at least one circumferential hump (14) defined at a radially outer position on the carcass structure (5) and engaging in an anchoring seating conforming in shape to said hump and defined in the belt structure (12) so as to fix the axial positioning of said belt structure relative to the carcass structure.

34. A tyre as claimed in claim 33 wherein said circumferential hump (14) is defined by at least one ribbon-like element applied round the carcass structure (5).

35. A tyre as claimed in claim 1 or 20, wherein the inflatable core (3) has at least one raised body (4, 4a) disposed at a radially inner position.

36. A tyre as claimed in claim 35, wherein the raised body (4, 4a) is of a self-sealing material.

37. A tyre as claimed in claim 35, wherein the raised body (4, 4a) is arranged to house an airtight valve (4b).

38. A tyre as claimed in claim 35, wherein said raised body (4) is defined by a continuous circumferential ribbing.

39. A tyre as claimed in claim 35, wherein four raised bodies (4a) are arranged, said bodies being disposed circumferentially spaced apart by 90° from each other.

40. A tyre as claimed in claim 1 or 20, wherein said inflatable core (3) and said carcass structure (5) have a substantially elliptic elongated cross-sectional profile, parallelly to the axis of said tyre.

41. A tyre as claimed in claim 40, wherein the ratio between the maximum radial size (H) and maximum axial size (W) of said tyre is lower than or equal to 0.65.

42. A tyre as claimed in one or more of claims 20 to 41, wherein said main portions (7a) have respective locating sides (7e) substantially facing each other and arranged to act and bear on respective circumferential abutment surfaces (16) offered by a rim (2) to be associated with said tyre and respectively facing away from an equatorial median plane (X-X).

43. A vehicle wheel comprising a tyre (1) as claimed in claim 1, and a rim associated therewith, wherein said rim comprises a central portion for engagement with a hub of a vehicle wheel, and engagement means for said tyre, said engagement means of said rim comprising a pair of circumferential abutment surfaces (16) located at axially opposite positions relative to an equatorial plane (X-X) of said rim (2) and turned in opposite directions relative to said equatorial plane, each of said abutment surfaces (16) being disposed axially internally relative to the annular anchoring element (7) of the tyre with which it interacts.

44. A vehicle wheel as claimed in claim 43, wherein said rim further comprises a pair of cylindrical centring surfaces (17) extending away from the equatorial median plane (X-X) of the rim (2) in the extension of said abutment surfaces (16), each of said cylindrical centring surfaces (17) offering an abutment seating for an inner circumferential edge of one said annular anchoring element (7).

45. A vehicle wheel as claimed in claim 44, wherein said rim further comprises auxiliary circumferential locating portions (18), each of which extends in the extension of one of said cylindrical centring surfaces (17) and is arranged to operate on one said annular anchoring element (7) of the tyre (1) at an opposite position relative to the corresponding circumferential abutment surface (16).

46. A vehicle wheel as claimed in claim 43, wherein said rim further comprises a connecting portion (19) extending between said circumferential abutment surfaces (16) and arranged to offer an abutment surface for a carcass structure (5) of one said tyre (1).

47. A vehicle wheel as claimed in claim 46, wherein said connecting portion (19) has a cylindrical conformation.

48. A vehicle wheel as claimed in claim 46, wherein said connecting portion (19) has a curved cross-sectional profile the concavity of which is directed externally of the rim (2).

49. A vehicle wheel as claimed in claim 43, wherein said rim further comprises at least one pressure transducer (20) operatively engaged through said connecting portion (19), said pressure transducer (20) being arranged to detect the inner pressure of a tyre (1) mounted on the rim (2), through a carcass structure (5) represented by the tyre itself.

## Patentansprüche

1. Luftreifen für Fahrzeugräder, umfassend:
einen aufblasbaren Schlauch (3) torusförmiger Ausbildung, mit einem zu einem Ring geschlossenen Querprofil;
einem Unterbau (5), umfassend mindestens eine erste Unterbaulage (6), die durch mindestens ein fadenförmiges Element (6a) gebildet ist, das um das Querprofil des aufblasbaren Schlauchs (3)herum zur Bildung von ersten nacheinander anliegenden Windungen gemäß der Abwicklung des Umfangs des aufblasbaren Schlauches gewickelt ist;
ein Paar von ringförmigen Verankerungselementen (7) an einer Felge (2), die voneinander axial beabstandet sind und sich in Umfangsrichtung in einer radial innerhalb des aufblasbaren Schlauchs liegenden Position erstrecken;
einen Gürtelaufbau (12), der den Unterbau (5) in einer gegenüber der Drehachse des Reifens radial äußeren Position umgibt;
eine Lauffläche (13), die in Umfangsrichtung in einer gegenüber dem Gürtelaufbau (12) äußeren Position angeordnet ist;
**dadurch gekennzeichnet, dass** der aufblasbare Schlauch (3) Umfangsabschnitte (3a) mit einem zum Fülldruck differenzierten Widerstand aufweist.

2. Luftreifen nach Anspruch 1, bei dem mindestens ein erster Abschnitt (3a) der Umfangsabschnitte mit einem gegenüber dem Fülldruck erhöhten Widerstand im Bereich mindestens eines unter den Abschnitten der äußeren und der inneren Flächen des Schlauches (3) angeordnet ist.

3. Luftreifen nach Anspruch 2, bei dem der aufblasbare Schlauch mindestens eine Luftkammer (3) mit mindestens einer Wandung umfasst, die im Bereich des mindestens ersten Abschnittes (3a) eine vergrößerte Dicke aufweist.

4. Luftreifen nach Anspruch 2, bei dem der aufblasbare Schlauch eine Luftkammer (3) aufweist, die mit mindestens einem Materialabschnitt versehen ist, der im Bereich des mindestens ersten Abschnittes (3) einen vergrößerten Modul aufweist.

5. Luftreifen nach Anspruch 2, bei dem der aufblasbare Schlauch eine Luftkammer (3) und mindestens ein leistenförmiges Element umfasst, das am mindestens einen Oberflächenabschnitt der mindestens einen Luftkammer zur Bildung des ersten Abschnittes (3a) angeordnet ist.

6. Luftreifen nach Anspruch 1, bei dem jedes der ringförmigen Verankerungselemente (7) außerhalb der ersten Unterbaulage (6) angeordnet ist.

7. Luftreifen nach Anspruch 6, bei dem jedes der ringförmigen Verankerungselemente (7) auf der gegenüber der Unterbaulage abgewandten Seite mit mindestens einem textilen Halte- und Verstärkungsaufbau (11) überzogen ist.

8. Luftreifen nach Anspruch 7, bei dem der Halte- und Verstärkungsaufbau (11) sich über die abgewandten Umfangsränder des Verankerungselementes (7) hinaus verlängert, um die erste Unterbaulage (6) zu überlappen.

9. Luftreifen nach Anspruch 1, bei dem der aufblasbare Schlauch (3) in unter Naturgummi und Butylgummi gewähltem Gummi ausgeführt ist.

10. Luftreifen nach Anspruch 1, bei dem das erste fadenförmige Element ein Kordfaden aus Textilmaterial mit den Abmessungen zwischen 0,28 und 1,2 mm ist.

11. Luftreifen nach Anspruch 1, bei dem jede der ersten Windungen gemäß einer zwischen 73° und 90° liegenden Abwinkelung gegenüber einer sich längs des Umfangs erstreckenden Richtung des Reifens (1) ausgerichtet ist.

12. Luftreifen nach Anspruch 1, bei dem die erste Unterbaulage (6) einen bandförmigen Streifen umfasst, der durch mindestens zwei zueinander fadenförmigen Elementen gebildet ist, wobei der bandförmige Streifen um das Querprofil der aufblasbaren Seele (3) zur Bildung der nacheinander anliegenden Windungen längs der Umfangsabwicklung der aufblasbaren Seele selbst herumgewickelt ist.

13. Luftreifen nach Anspruch 7, bei dem der textile Halte- und Verstärkungsaufbau durch mindestens eine zweite Unterbaulage (11) festgelegt ist, die durch mindestens ein zweites, fadenförmiges Element gebildet ist, das um die erste Unterbaulage (6) und die ringförmigen Verstärkungselemente (7) herum zur Bildung von zweiten nacheinander anliegenden Windungen längs der Umfangsabwicklung der ringförmigen Elemente gewickelt ist.

14. Luftreifen nach Anspruch 13, bei dem das zweite fadenförmige Element ein Kordfaden aus Textil mit den Abmessungen zwischen 0,28 und 1,2 mm ist.

15. Luftreifen nach Anspruch 13, bei dem jede der die zweite Unterbaulage (11) bildenden Windungen gemäß einer Abwinkelung zwischen 0° und 17° gegenüber einer radialen, durch die Drehachse des Reifens (1) gelegten Ebene ausgerichtet ist.

16. Luftreifen nach Anspruch 13, bei dem jeder der die zweite Unterbaulage (11) bildenden Windungen in einer gegenüber der Ausrichtung der die erste Unterbaulage (6) bildenden Windungen ausgerichtet ist.

17. Luftreifen nach Anspruch 13, bei dem die zweite Unterbaulage (11) einen bandförmigen Streifen umfasst, der durch mindestens zwei fadenförmige, zueinander parallele Elemente gebildet ist, wobei der bandförmige Streifen um das Querprofil der aufblasbaren Seele (3) herum zur Bildung der nacheinander anliegenden Windungen längs der Umfangsabwicklung der aufblasbaren Seele selbst gewickelt ist.

18. Luftreifen nach Anspruch 1, umfassend überdies mindestens eine erste Elastomerschicht, die zwischen der ersten Unterbaulage (6) und des aufblasbaren Schlauchs (3) liegt.

19. Luftreifen nach Anspruch 8, umfassen überdies eine zweite Elastomerschicht, die zwischen der erste Unterbaulage (6) und mindestens einem textilen Halte- und Verstärkungsaufbau (11) liegt.

20. Luftreifen nach einem oder mehreren vorstehenden Ansprüchen, **dadurch gekennzeichnet, dass**
jedes der ringförmigen Verankerungselemente (7) eine Hauptabschnitt (7a) aufweiset, der ein Profil im Querschnitt besitzt, das zur Festlegung eines gegenüber dem aufblasbaren Schlauch (3) inneren Umfangsvorsprung im wesentlichen als Kurvenspitze ausgebildet ist.

21. Luftreifen nach Anspruch 20, bei dem jedes Verankerungselement (7) überdies einen axial äußeren Verlängerungsabschnitt (7b) aufweist, der sich vom Hauptabschnitt (7a) erstreckt und sich von der Drehachse des Reifens (1) weg verjüngt.

22. Luftreifen nach Anspruch 1 oder 20, bei dem die ringförmigen Verankerungselemente (7) gegenseitig durch mindestens einen Verbindungsabschnitt (7d) gebunden sind, der sich zwischen den Hauptabschnitten (7a) erstreckt.

23. Luftreifen nach Anspruch 1 oder 20, bei dem das Verankerungselement (7) in Elastomer ausgebildet ist.

24. Luftreifen nach Anspruch 23, bei dem jedes Verankerungselement (7) eine Härte zwischen 72° und 94° Shore A aufweist.

25. Luftreifen nach Anspruch 20, bei dem jedes ringförmige Verankerungselement (7) überdies einen ringförmigen Verstärkungseinsatz (9) erfasst, der mindestens teilweise im Hauptabschnitt (7a) eingebettet ist.

26. Luftreifen nach Anspruch 25, bei dem der ringförmige Verstärkungseinsatz (9) in einer gegenüber dem Hauptabschnitt (7a) radial inneren Position angeordnet ist.

27. Luftreifen nach Anspruch 25, bei dem der radiale Verstärkungseinsatz (9) vollständig im Hauptabschnitt (7a) eingebettet ist.

28. Luftreifen nach Anspruch 27, bei dem der Hauptabschnitt (7a) mindestens eine Einsetzkerbe (10) in Umfangsrichtung aufweist, die sich vom ringförmigen Verstärkungseinsatz (9) zur Außenfläche des Hauptabschnittes selbst erstreckt.

29. Luftreifen nach Anspruch 25, bei dem der ringförmige Verstärkungseinsatz (9) aus Textilmaterial besteht.

30. Luftreifen nach Anspruch 25, bei dem der ringförmige Verstärkungseinsatz (9) aus Metall besteht.

31. Luftreifen nach Anspruch 25, bei dem der mindestens ein fadenförmiges Element ausgeführt ist, das zur Bildung einer Vielzahl von Windungen um die Drehachse des Reifens (1) herum aufgewickelt ist.

32. Luftreifen nach Anspruch 1 oder 20, bei dem die Lauffläche (13) und der Gürtelaufbau (12) ein ringförmiges, austauschbares Element festlegen, das dem Unterbau (5) abnehmbar zugeordnet ist.

33. Luftreifen nach Anspruch 1 oder 20, umfassend überdies mindestens eine Umfangsnase (14), die in einer radial äußeren Position am Unterbau (5) festgelegt ist und in einer zu derselben gegenprofilierten Verankerungsaufnahme eingreift, die im Gürtelaufbau (12) festgelegt ist, um die axiale Positionierung des Gürtelaufbaus gegenüber dem Unterbau selbst festzusetzen.

34. Luftreifen nach Anspruch 33, bei dem die Umfangsnase (14) durch mindestens ein randförmiges Element festgelegt ist, das um den Unterbau (5) herum gelegt ist.

35. Luftreifen nach Anspruch 1 oder 20, bei dem der aufblasbare Schlauch (3) mindestens eine erhöhten Körper (4, 4a) aufweist, der in einer radial inneren Position angeordnet ist.

36. Luftreifen nach Anspruch 35, bei dem der erhöhte Körper (4, 4a) aus einem selbstversiegelnden Werkstoff besteht.

37. Luftreifen nach Anspruch 35, bei dem der erhöhte Körper (4, 4a) zur Aufnahme eines Lufthalteventils (4b) ausgelegt ist.

38. Luftreifen nach Anspruch 35, bei dem der erhöhte Körper (4) durch eine durchgehende Umfangsrippung festgelegt ist.

39. Luftreifen nach Anspruch 35, bei dem vier erhöhte Körper (4a) bereitgestellt sind, die mit Abständen von 90° in Umfangsrichtung angeordnet sind.

40. Luftreifen nach Anspruch 1 oder 20, bei dem der aufblasbare Schlauch (3) und der Unterbau (5) ein im wesentlichen elliptisches Profil im Querschnitt aufweisen, das parallel zur Reifenachse verlängert ist.

41. Luftreifen nach Anspruch 40, bei dem das Verhältnis zwischen der radialen Höchstabmessung (H) und der axialen Höchstabmessung (W) des Reifens kleiner oder gleich 0,65 ist.

42. Luftreifen nach einem oder mehreren Ansprüchen 20 bis 41, bei dem die Hauptabschnitte (7a) jeweilige Anschlagseiten (7e) aufweisen, die im wesentlichen zueinander gerichtet und dazu bereitgestellt sind, um an jeweiligen Umfangsanschlagflächen (16) aufliegend zu wirken, die eine dem Reifen zuordenbare Felge (2) aufweist und jeweils an abgewandten Seiten von der äquatorialen Mittelebene (X-X) weggerichtet sind.

43. Fahrzeugrad, umfassend einen Luftreifen (1) gemäß Anspruch 1, und eine mit diesem verbundene Felge, bei dem die Felge umfasst:
einen mittigen Abschnitt, der an einer Fahrzeugradnabe in Eingriff kommt und
Eingriffsmittel für den Reifen, wobei die Eingriffsmittel der Felge ein Paar von Umfangsanschlagflächen (16) umfasst, die in gegenüber der äquatorialen Ebene (X-X) der Felge (2) axial gegenüberliegenden Positionen angeordnet und gegenüber der äquatorialen Ebene in abgewandte Richtungen gerichtet sind, wobei jede der Anschlagflächen (16) gegenüber dem ringförmigen Verankerungselement (7) des mit ihr zusammenwirkenden Reifens axial im Inneren angeordnet ist.

44. Fahrzeugrad nach Anspruch 43, bei dem die Felge überdies ein Paar von zylindrischen Zentrierflächen (17) aufweist, die sich von der äquatorialen Mittelebene (X-X) der Felge (2) weg auf der Verlängerung der Anschlagflächen (16) erstrecken, wobei jede der zylindrischen Zentrierfläche (14) einen Auflagesitz für einen inneren Umfangsrand eines ringförmigen Verankerungselementes (7) liefert.

45. Fahrzeugrad nach Anspruch 44, bei dem die Felge überdies Hilfsanschlagabschnitte (18) in Umfangsrichtung umfasst, von denen jeder sich auf der Verlängerung einer der zylindrischen Zentrierflächen (17) erstreckt und bereitgestellt ist, am ringförmigen Verankerungselement (7) des Reifens (1) in Gegenwirkung zur entsprechenden Umfangsanschlagfläche (16) zu wirken.

46. Fahrzeugrad nach Anspruch 43, bei dem die Felge überdies einen Verbindungsabschnitt (19) umfasst, der sich zwischen den Umfangsanschlagflächen (16) erstreckt und bereitgestellt ist, einen Auflagesitz für den Unterbau (5) eines Reifens (1) zu liefern.

47. Fahrzeugrad nach Anspruch 46, bei dem der Verbindungsabschnitt (19) eine zylindrische Ausbildung aufweist.

48. Fahrzeugrad nach Anspruch 46, bei dem der Verbindungsabschnitt (19) gemäß einem gekrümmten Querschnittsprofil mit außerhalb der Felge (2) gerichteter Konkavität ausgebildet ist.

49. Fahrzeugrad nach Anspruch 43, bei dem die Felge überdies mindestens einen Druckgeber (20) umfasst, der über den Verbindungsabschnitt (19) wirksam in Eingriff steht, wobei der Druckgeber (20) bereitgestellt ist, den Innendruck eines an der Felge (2) angebrachten Reifens (1) über einen durch den Reifen selbst dargestellten Unterbau (5) zu erfassen.

## Revendications

1. Bandage pneumatique pour roues de véhicules, comprenant:
- une âme gonflable (3) de conformation toroïdale, ayant un profil transversal en forme de bague fermée;
- une structure de carcasse (5) comprenant au moins une première toile de carcasse (6) formée d'au moins un premier élément filiforme (6a) enroulé autour du profil transversal de l'âme gonflable (3) à former des premières spires disposées consécutivement côte à côte le long de l'extension circonférentielle de l'âme gonflable;
- une paire d'éléments annulaires (7) pour l'ancrage à une jante (2), espacés l'un de l'autre en sens axial et s'étendant le long de la circonférence de l'âme gonflable à une position radiale interne;
- une structure de ceinture (12) circonscrivant la structure de carcasse (5) à une position radiale externe par rapport à l'axe de rotation du bandage pneumatique;
- une bande de roulement ou chape (13) disposée sur la circonférence du bandage pneumatique à une position radiale externe par rapport à la structure de ceinture (12),
**caractérisé en ce que** ladite âme gonflable (3) a des portions circonférentielles (3a) de résistance différenciée à la pression de gonflage.

2. Bandage pneumatique selon la revendication 1, dans lequel au moins une première portion (3a) desdites portions circonférentielles de résistance augmentée à la pression de gonflage est disposée au moins en correspondance avec une des portions d'intrados et d'extrados de ladite âme (3).

3. Bandage pneumatique selon la revendication 2, dans lequel ladite âme gonflable comporte au moins une chambre à air (3) ayant au moins une paroi d'épaisseur augmentée au moins en correspondance avec ladite première portion (3a).

4. Bandage pneumatique selon la revendication 2, dans lequel l'âme gonflable comporte une chambre à air (3) pourvue d'au moins une portion de matériau ayant un module augmenté au moins en correspondance avec ladite première portion (3a).

5. Bandage pneumatique selon la revendication 2, dans lequel ladite âme gonflable comporte une chambre à air (3) et au moins un élément en forme de bande disposé sur au moins une portion de surface de ladite au moins une chambre à air à former ladite première portion (3a).

6. Bandage pneumatique selon la revendication 1, dans lequel chacun desdits éléments d'ancrage annulaires (7) est disposé à l'extérieur de la première toile de carcasse (6).

7. Bandage pneumatique selon la revendication 6, dans lequel chacun desdits éléments d'ancrage annulaires (7) est recouvert d'au moins une structure textile de contention et de renforcement (11) sur le côté opposé par rapport à la toile de carcasse.

8. Bandage pneumatique selon la revendication 7, dans lequel ladite structure de contention et de renforcement (11) s'étend au-delà des bords circonférentiels opposés de l'élément d'ancrage (7) de manière à se superposer à la première toile de carcasse (6).

9. Bandage pneumatique selon la revendication 1, dans lequel ladite âme gonflable (3) est fabriquée en caoutchouc choisi entre le caoutchouc naturel et le caoutchouc butyle.

10. Bandage pneumatique selon la revendication 1, dans lequel ledit premier élément filiforme est une cordelette de matériau textile ayant des dimensions comprises entre 0,28 et 1,2 mm.

11. Bandage pneumatique selon la revendication 1, dans lequel chacune desdites spires est orientée selon un angle compris entre 73° et 90° par rapport à une direction d'extension circonférentielle du bandage pneumatique (1).

12. Bandage pneumatique selon la revendication 1, dans lequel ladite première toile de carcasse (6) comporte une bande rubanée formée d'au moins deux éléments filiformes parallèles, ladite bande rubanée étant enroulée autour du profil transversal de l'âme gonflable (3) à former lesdites spires disposées consécutivement côte à côte le long de l'extension circonférentielle de l'âme gonflable.

13. Bandage pneumatique selon la revendication 7, dans lequel ladite structure textile de contention et de renforcement est définie par au moins une deuxième toile de carcasse (11) formée d'au moins un deuxième élément filiforme enroulé autour de la première toile de carcasse (6) et desdits éléments d'ancrage annulaires (7) à former des deuxièmes spires disposées consécutivement côte à côte le long de l'extension circonférentielle desdits éléments annulaires.

14. Bandage pneumatique selon la revendication 13, dans lequel ledit deuxième élément filiforme est une cordelette de matériau textile ayant des dimensions comprises entre 0,28 et 1,2 mm.

15. Bandage pneumatique selon la revendication 13, dans lequel chacune desdites spires formant la deuxième toile de carcasse (11) est orientée selon un angle compris entre 0° et 17° par rapport à un plan radial passant par l'axe de rotation du bandage pneumatique (1).

16. Bandage pneumatique selon la revendication 13, dans lequel chacune des spires formant la deuxième toile de carcasse (11) est orientée en direction opposée par rapport à l'orientation des spires formant la première toile de carcasse (6).

17. Bandage pneumatique selon la revendication 13, dans lequel ladite deuxième toile de carcasse (11) comporte une bande rubanée formée d'au moins deux éléments filiformes parallèles, ladite bande rubanée étant enroulée autour du profil transversal de l'âme gonflable (3) à former lesdites spires disposées consécutivement côte à côte le long de l'extension circonférentielle de l'âme gonflable.

18. Bandage pneumatique selon la revendication 1, comprenant en outre au moins une première couche élastomère interposée entre la première toile de carcasse (6) et l'âme gonflable (3).

19. Bandage pneumatique selon la revendication 8, comprenant en outre au moins une deuxième couche élastomère interposée entre la première toile de carcasse (6) et ladite au moins une structure textile de contention et de renforcement (11).

20. Bandage pneumatique selon une ou plusieurs des revendications précédentes, **caractérisé en ce que** chacun des éléments d'ancrage annulaires (7) a une portion principale (7a) ayant un profil en coupe transversale essentiellement en forme de cuspide de manière à définir une saillie circonférentielle intérieure par rapport à l'âme gonflable (3).

21. Bandage pneumatique selon la revendication 20, dans lequel chaque élément d'ancrage (7) comporte en outre une portion de prolongement extérieure en sens axial (7b) s'étendant de la portion principale (7a) et à section décroissante en s'éloignant de l'axe de rotation du bandage pneumatique (1).

22. Bandage pneumatique selon la revendication 1 ou 20, dans lequel lesdits éléments d'ancrage annulaires (7) sont liés les uns aux autres par au moins une portion d'interconnexion (7d) s'étendant entre lesdites portions principales (7a).

23. Bandage pneumatique selon la revendication 1 ou 20, dans lequel chaque élément d'ancrage (7) est fabriqué en élastomère.

24. Bandage pneumatique selon la revendication 23, dans lequel chaque élément d'ancrage (7) a une dureté comprise entre 72° et 94° Shore A.

25. Bandage pneumatique selon la revendication 20, dans lequel chaque élément d'ancrage annulaire (7) comporte en outre une pièce annulaire insérée de renforcement (9) incorporée au moins partiellement dans la portion principale (7a).

26. Bandage pneumatique selon la revendication 25, dans lequel la pièce annulaire insérée de renforcement (9) est disposée à une position radiale interne par rapport à ladite portion principale (7a).

27. Bandage pneumatique selon la revendication 25, dans lequel la pièce annulaire insérée de renforcement (9) est incorporée intégralement dans la portion principale (7a).

28. Bandage pneumatique selon la revendication 27, dans lequel ladite portion principale (7a) a au moins une entaille circonférentielle d'insertion (20) s'étendant de la pièce annulaire insérée de renforcement (9) à une surface extérieure de la portion principale.

29. Bandage pneumatique selon la revendication 25, dans lequel la pièce annulaire insérée de renforcement (9) est réalisée en matière textile.

30. Bandage pneumatique selon la revendication 25, dans lequel la pièce annulaire insérée de renforcement (9) est fabriquée en métal.

31. Bandage pneumatique selon la revendication 25, dans lequel la pièce annulaire insérée de renforcement (8) se compose d'au moins un élément filiforme enroulé à former une pluralité de spires autour de l'axe de rotation du bandage pneumatique (1).

32. Bandage pneumatique selon la revendication 1 ou 20, dans lequel la bande de roulement (13) et la structure de ceinture (12) définissent un élément annulaire interchangeable associé de manière amovible à ladite structure de carcasse (5).

33. Bandage pneumatique selon la revendication 1 ou 20, comprenant en outre au moins un bossage circonférentiel (14) défini à une position radiale externe sur la structure de carcasse (5) et s'engageant dans un siège d'ancrage épousant la forme dudit bossage et défini dans la structure de ceinture (12) de manière à fixer le positionnement axial de ladite structure de ceinture par rapport à la structure de carcasse.

34. Bandage pneumatique selon la revendication 33 dans lequel ledit bossage circonférentiel (14) est défini par au moins un élément rubané appliqué autour de la structure de carcasse (5).

35. Bandage pneumatique selon la revendication 1 ou 20, dans lequel l'âme gonflable (3) a au moins un corps en relief (4, 4a) disposé à une position radiale interne.

36. Bandage pneumatique selon la revendication 35, dans lequel le corps en relief (4, 4a) est de matière auto-obturatrice.

37. Bandage pneumatique selon la revendication 35, dans lequel le corps en relief (4, 4a) est destiné à loger une soupape étanche à l'air (4b).

38. Bandage pneumatique selon la revendication 35, dans lequel ledit corps en relief (4) est défini par une nervure circonférentielle continue.

39. Bandage pneumatique selon la revendication 35, dans lequel on prévoit quatre corps en relief (4a), disposés sur la circonférence de l'âme gonflable et espacés réciproquement de 90°.

40. Bandage pneumatique selon la revendication 1 ou 20, dans lequel ladite âme gonflable (3) et ladite structure de carcasse (5) ont un profil sensiblement elliptique en coupe transversale, s'étendant parallèle à l'axe dudit bandage pneumatique.

41. Bandage pneumatique selon la revendication 40, dans lequel le rapport entre la dimension radiale maximum (H) et la dimension axiale maximum (W) dudit bandage pneumatique est inférieur ou égal à 0,65.

42. Bandage pneumatique selon une ou plusieurs des revendications 20 à 41, dans lequel lesdites portions principales (7a) ont des côtés de repérage respectifs (7e) sensiblement en regard et destinés à agir prenant appui sur des surfaces de butées circonférentielles respectives (16) présentées par une jante (2) à associer à ladite bande pneumatique et tournées respectivement vers des côtés opposés en s'éloignant d'un plan médian équatorial (X-X).

43. Roue de véhicule comprenant un bandage pneumatique (1) selon la revendication 1 et une jante associée à celui-ci, dans laquelle ladite jante comporte:
une portion centrale à engager à un moyeu d'une roue d'un véhicule et des moyens d'engagement pour ledit bandage pneumatique, lesdits moyens d'engagement de ladite jante comprenant une paire de surfaces circonférentielles de butée (16) disposées en positions opposées en sens axial par rapport à un plan équatorial (X-X) de ladite jante (2) et tournées en directions opposées par rapport audit plan équatorial, chacune desdites surfaces de butée (16) étant disposée à l'intérieur en sens axial par rapport à l'élément d'ancrage annulaire (7) du bandage pneumatique avec lequel elle interagit.

44. Roue de véhicule selon la revendication 43, dans laquelle ladite jante comporte en outre une paire de surfaces de centrage cylindriques (17) s'étendant en s'éloignant du plan équatorial médian (X-X) de la jante (2) dans le prolongement desdites surfaces de butée (16), chacune desdites surfaces de centrage cylindriques (17) fournissant un siège de butée pour un bord circonférentiel intérieur d'un élément d'ancrage annulaire (7) susdit.

45. Roue de véhicule selon la revendication 44, dans laquelle ladite jante comporte en outre des portions de repérage circonférientielles auxiliaires (18), chacune desquelles d'étend dans le prolongement d'une desdites surfaces de centrage cylindriques (17) et est destinée à opérer sur un élément d'ancrage annulaire (7) susdit du bandage pneumatique (1) à une position opposée par rapport à la surface de butée circonférentielle correspondante (16).

46. Roue de véhicule selon la revendication 43, dans laquelle ladite jante comporte en outre une portion de liaison (19) s'étendant entre lesdites surfaces de butée circonférentielles (16) et arrangée de manière à offrir un siège de butée pour une structure de carcasse (5) d'un bandage pneumatique (1) susdit.

47. Roue de véhicule selon la revendication 46, dans laquelle ladite portion de liaison (19) a une conformation cylindrique.

48. Roue de véhicule selon la revendication 46, dans laquelle ladite portion de liaison (19) a un profil courbé en coupe transversale, dont la concavité est tournée vers l'extérieur de la jante (2).

49. Roue de véhicule selon la revendication 43, dans laquelle ladite jante comporte en outre au moins un transducteur de pression (20) engagé de manière opérationnelle à travers ladite portion de liaison (19), ledit transducteur de pression (20) étant agencé de manière à détecter la pression intérieure d'un bandage pneumatique (1) monté sur la jante (2), à travers une structure de carcasse (5) représentée par le bandage pneumatique lui-même.
